**Europäisches Patentamt**

**European Patent Office**

**Office européen des brevets**

(11) Veröffentlichungsnummer: **0 398 175**

**A1**

# (12) EUROPÄISCHE PATENTANMELDUNG

(21) Anmeldenummer: **90108896.3**

(22) Anmeldetag: **11.05.90**

(51) Int. Cl.5: **F04D 13/02, H02K 49/10**

(30) Priorität: **13.05.89 DE 8906020 U**

(43) Veröffentlichungstag der Anmeldung:
**22.11.90 Patentblatt 90/47**

(84) Benannte Vertragsstaaten:
**AT BE CH DE FR GB IT LI**

(71) Anmelder: **RHEINHÜTTE GMBH & CO.**
**Rheingaustrasse 96-100**
**D-6200 Wiesbaden 12(DE)**

(72) Erfinder: **Auchter, Bruno, Dipl.-Ing.**
**Fontane Strasse 23**
**D-6500 Mainz 31(DE)**

(74) Vertreter: **Mey, Klaus-Peter, Dr.-Ing.**
**Dipl.-Wirt.-Ing. et al**
**Patentanwälte**
**HEMMERICH-MÜLLER-GROSSE-POLLMEIER--**
**MEY-VALENTIN Aachener Strasse 710**
**D-5020 Frechen 4(DE)**

(54) **Magnetkupplungspumpe.**

(57) Die Erfindung betrifft eine Magnetkupplungspumpe, mit Pumpenlaufrad und einem damit drehfest verbundenen Innenrotor, der um einen Zentrierring mit der Laufradwelle drehbar angeordnet ist und über eine Magnetkupplung mit in einem Lagerträger angeordneten, angetriebenen Außenrotor in Wirkungsverbindung steht, wobei das Antriebsmoment mittels Magnetfeldern synchron vom atmosphärenseitigen Außenrotor durch einen druckdichten Spalttopf auf den in der Förderflüssigkeit arbeitenden Innenrotor und Laufrad übertragbar ist. Bekannte Pumpen dieser Art haben den Nachteil, daß Schäden infolge Lagerverschleiß, insbesondere Schäden am Spalttopf und an der Magnetkupplung nicht sicher vermieden werden. Mit der Erfindung ist daher vorgesehen, daß der zwischen Lagerträger (1) und Außenrotor (10) befindliche Lagerträgerspalt (11) und der Zentrierringspalt (21) zwischen Zentrierring (2) und Innenrotor (20) kleiner sind als die Magnetspalte (13, 23) zwischen den Magneten (12, 22) und dem Spalttopf (3). Besonders vorteilhaft beträgt das Verhältnis von Lagerträgerspalt (11) und Zentrierringspalt (21) zu den Magnetspalten (13, 23) zwischen 0,5 bis 0,9, wobei zweckmäßigerweise die Magnetspalte (13, 23) eine Weite von 0,5 bis 3 mm aufweisen, vorzugsweise im Bereich um 1 mm. Der Zentrierringspalt (21) kann etwas kleiner als der Lagerträgerspalt (11) sein, wobei vorzugsweise der Zentrierringspalt (21) möglichst eng über seine gesamte Länge dimensioniert und der Lagerträgerspalt (11)

von außen zugänglich bzw. direkt anbohrbar ausgebildet ist.

Fig. 2

## Magnetkupplungspumpe

Die Erfindung bezieht sich auf eine Magnetkupplungspumpe, insbesondere für das Fördern von gefährlichen und umweltbelastenden Flüssigkeiten, mit Pumpenlaufrad und einem damit drehfest verbundenen Innenrotor, der um einen Zentrierring mit der Laufradwelle drehbar angeordnet ist und über eine Magnetkupplung mit in einem Lagerträger angeordneten, angetriebenen Außenrotor in Wirkungsverbindung steht, wobei das Antriebsmoment mittels Magnetfeldern synchron vom atmosphärenseitigen Außenrotor durch einen druckdichten Spalttopf auf den in der Förderflüssigkeit arbeitenden Innenrotor und Laufrad übertragbar ist.

Aufgrund des zur Atmosphäre mittels Spalttopf vollkommen geschlossenen hydraulischen Systems wird diese Pumpenart den Forderungen des Umweltschutzes in besonderem Maße gerecht und ist von daher für den Einsatz in allen Bereichen der chemischen und artverwandten Industrie zur Förderung von aggressiven, explosiven oder toxischen Medien, die unter keinen Umständen in die Atmosphäre gelangen dürfen, prädestiniert.

Bei bekannten Vorrichtungen dieser Art kommt es bei Störfällen insbesondere infolge Lagerverschleiß immer wieder zum Ausfall bzw. zur Beschädigung an sich nicht schadhafter Pumpenteile, beispielsweise auch hinsichtlich des Spalttopfes und der Magnetkupplung. Auch können die aggressiven Fördermedien bei Bruch des Spalttopfes in die Umgebung gelangen und Menschen gefährden, die Umwelt belasten sowie intakte Pumpenteile und sonstige Gerätschaften unbrauchbar machen. Mit den bekannten Magnetkupplungspumpen kann ein plötzlich zum Ausfall führender Lagerschaden nicht verhindert werden. Ferner kann der Spalttopf nicht sicher vor seiner Zerstörung im Schadensfall geschützt werden, insbesondere gilt das für SIC-Lager, die kaum verschleißen, sondern nur schlagartig zu Bruch gehen und blockieren, mit der Folge, daß erfahrungsgemäß der Spalttopf durchschlagen wird.

Zur Schadensbegrenzung wurde beispielsweise in der EP-A2-0286822 vorgeschlagen, doppelwandige Spalttöpfe einzusetzen. Der Zwischenraum zwischen den beiden ineinandergesteckten Spalttöpfen wird dabei auf Leckage überwacht. Beim Auftreten eines Druckanstieges oder Druckabfalls wird über ein geeignetes System Alarm ausgelöst oder die Pumpe abgeschaltet. Diese bekannte Lösung weist aber verschiedene Nachteile auf, insbesondere ist die Herstellung von Doppeltopfsystemen teuer und schwierig. Ferner können durch unterschiedliche Erwärmungen beim Betrieb, ungleichmäßige Wärmeübergänge oder Differenzen in den Wandstärken unzulässige Spannungen entstehen, die sich in einer Verlagerung des Topfsystems auswirken können und unter Umständen ein Versagen begünstigen. Beim Versagen der Innenlagerung , die aufgrund des verwendeten Werkstoffes Siliziumcarbid meist schlagartig erfolgt und zu starken Auslenkungen und Verlagerungen des Innenrotors führen kann, können beide Spalttöpfe gleichzeitig durchschlagen werden und versagen, ohne daß eine Leckvorwarnung erfolgen kann.

Es wurde ferner in der deutschen Offenlegungsschrift DE-A1-3715484 vorgeschlagen, daß der Spalt zwischen Spalttopf und Treiber an einer Opferreibfläche kleiner sein soll als der Spalt zwischen Außenläufer und dem Spalttopf im einem bestimmten Zylinderabschnitt. Die Opferfläche ist zwar verdickt, jedoch Bestandteil des Spalttopfes und bildet damit nachteilig selbst das zu beschützende Teil. Eine Opferstrecke bzw. Verstärkung am Spalttopf kann aber dessen Zerstörung nicht sicher verhindern. Die Opferstelle liegt zudem innen und ist nachteilig von außen nicht direkt zugänglich. Gegen ein Anlaufen des Innenläufers gegen den Spalttopf sind in der genannten Druckschrift keine Maßnahmen vorgesehen.

Es ist daher Aufgabe der Erfindung, eine Magnetkupplungspumpe vorzustellen, mittels derer die vorgenannten Nachteile vermieden werden können, d. h., es sollen Schäden infolge Lagerverschleiß, insbesondere Schäden am Spalttopf und an der Magnetkupplung vermieden werden, wodurch die Betriebssicherheit der Pumpe verbessert und die Schäden bei Ausfall minimiert werden können.

Die Lösung der gestellten Aufgabe gelingt erfindungsgemäß dadurch, daß der zwischen Lagerträger und Außenrotor befindliche Lagerträgerspalt und der Zentrierringspalt zwischen Zentrierring und Innenrotor kleiner sind als die Magnetspalte zwischen den Magneten und dem Spalttopf. Bei Lagerverschleiß wird auf diese Weise vorteilhaft eine Berührung der Rotoren mit dem dünnwandigen Spalttopf und damit vornehmlich dessen Beschädigung sicher verhindert. Das gilt sowohl für Verschleißschäden am Pumpenwellengleitlager als auch an den antriebseitigen Kugellagern. Nach der vorliegenden Erfindung kann ein Durchschlagen des Spalttopfes nicht mehr eintreten, da die enge Ausbildung der Spalte zwischen Außenrotor und Lagerträger bzw. Innenrotor und Zentrierring es nicht zuläßt, daß eine Berührung der rotierenden Teile mit dem Spalttopf stattfinden kann. Bei einer Überwachung des Schwingungsverhaltens der Pumpe und/oder der Leistungsaufnahme des Antriebsmotors können Unregelmäßigkeiten rechtzeitig erkannt und durch geeignete Maßnahmen als Auslöser für das Abschaltsignal benutzt werden.

Die Spalte zwischen Spalttopf und den Magneten betragen dabei im allgemeinen jeweils zwischen 0,8 - 3 mm, vorzugsweise 1 mm. Die Spalte zwischen Lagerträger und Außenrotor einerseits sowie Zentrierring und Innenrotor andererseits liegen zweckmäßigerweise bei etwa 50 - 70 % des vorgenannten Maßes, vorzugsweise betragen diese Abstände zwischen 0,5 - 0,7 mm.

Nach einer vorteilhaften Ausgestaltung der Erfindung ist der Lagerträgerspalt von außen zugänglich bzw. direkt anbohrbar ausgebildet. Der besondere Vorteil der außenliegenden Anordnung des Lagerträgers mit Lagerträgerspalt zum Außenrotor liegt darin, daß das Gehäuse an dieser Stelle angebohrt werden kann, um eine kontinuierliche Verschleißüberwachung auf einfache Weise zu installieren.

Weitere Einzelheiten, Merkmale und Vorteile der Erfindung ergeben sich aus der nachstehenden Erläuterung eines in den Zeichnungen schematisch dargestellten Ausführungsbeispieles.

Es zeigen:

Fig. 1 eine erfindungsgemäße Magnetpumpe in geschnittener Seitenansicht,

Fig. 2 Ausschnitt aus Figur 1 mit vergrößertem Maßstab im Bereich der Magnetkupplung.

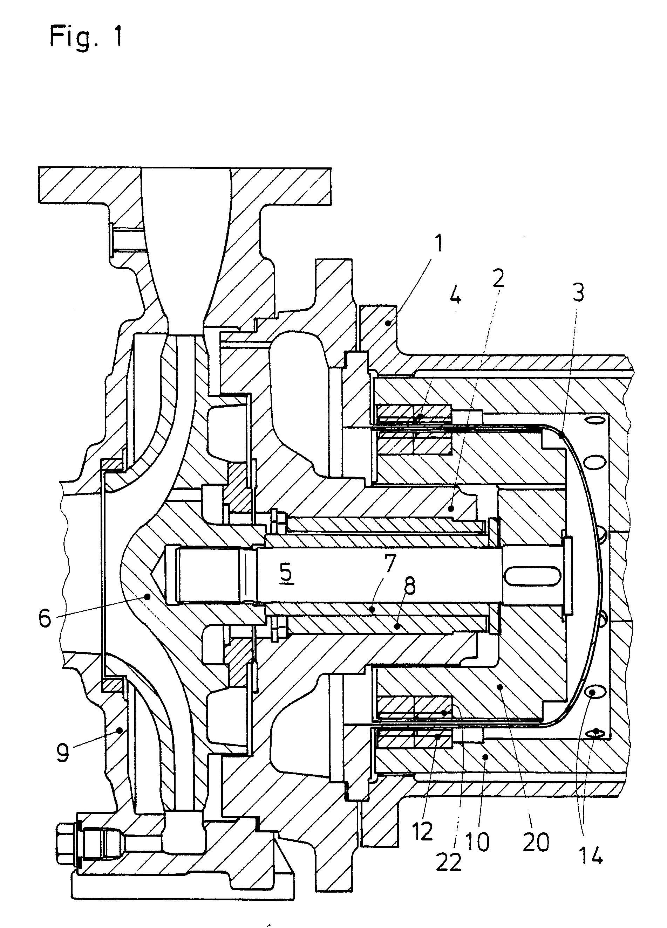

Figur 1 zeigt eine Magnetkupplungspumpe als eine vollkommen geschlossene Kreiselpumpe ohne Wellendurchführung mit permanentmagnetischer Übertragung des Antriebsdrehmomentes. In ihrem konstruktiven Aufbau besteht die Pumpe im wesentlichen aus einem Lagergehäuse bzw. Lagerträger (1) mit darin angeordnetem Zentrierring (2), Spalttopf (3) und Magnetkupplung (4), die kraftschlüssig das Antriebsmoment auf die Laufradwelle (5) mit daran befestigtem Laufrad (6) überträgt. Die Welle (5) ist über die Lagerhülse (7) und Lagerbuchse (8) hydrodynamisch gleitgelagert, wobei die Lagerbuchse (8) mit dem Zentrierring (2) verbunden ist. Das Pumpenlaufrad (6) befindet sich bekanntermaßen in einem Spiralgehäuse (9).

Die Schmierung der Gleitlagerung (7, 8) der Welle (5) wird durch das Fördermedium selbst gewährleistet. Da das Gleitlager (7, 8) direkt dem Fördermedium ausgesetzt ist, werden an den Gleitlagerwerkstoff besonders hohe Anforderungen gestellt. Aufgrund der hervorragenden chemischen Beständigkeit und der extrem hohen Verschleißfestigkeit, verbunden mit herausragenden physikalischen Eigenschaften kommt gesintertes Siliziumkarbid (SiC) zur Anwendung.

Der Antrieb des hydraulischen Teils der Pumpe erfolgt über die Zentraldrehkupplung (4), deren in der Atmosphäre liegender Außenrotor (10) das vom Motor (nicht dargestellt) aufgebrachte Drehmoment auf den im Fördermedium befindlichen Innenrotor (20), Welle (5) und Laufrad (6) einleitet.

Die Axiallagerung des Innenrotors (20) bzw. der Welle (5) wird durch eine Kombination von einer selbstregulierenden Axialschubentlastung und einer Restaxialschub-Aufnahme durch einen Axiallagerring übernommen. Der Axialschubausgleich erfolgt hydrodynamisch im Zusammenwirken von Drosselstrecken und Laufradentlastungsbohrungen selbstregulierend berührungsfrei. Druckbeaufschlagtes Medium am Laufradaustritt strömt dabei über die axiale Drosselstrecke zwischen Laufrad (6) und Zentrierring (2) in einen Entlastungsraum. Der hier wirksame Druckaufbau vergrößert den radialen Drosselspalt zwischen Entlastungsscheibe und Zentrierring (2), wodurch das Medium unter Druckabfall zu den Entlastungsbohrungen und zum Gleitlager (7, 8) strömt. Der Druckabfall im Entlastungsraum bewirkt eine umgehende Verringerung des radialen Drosselspaltes zwischen Entlastungsscheibe und Zentrierring (2). Der sich einstellende Beharrungszustand führt zum Kräftegleichgewicht zwischen Axialschub und Entlastung, so daß der Innenrotor (20) mit Welle (5) auf einem Flüssigkeitsfilm gleitend axial schwimmend gelagert ist. Der Außenrotor (10) ist durch geschmierte Wälzlager (nicht dargestellt) im Lagerträger (1) gelagert.

Grundprinzip der Übertragung des Antriebsmomentes bzw. der Magnetkupplung (4) ist die bekannte Paarung bzw. ein Zusammenwirken von Permanentmagneten (12, 22) an den Rotoren (10, 20), wobei die außenliegende Gruppe (12) das vom Motor (nicht dargestellt) aufgebrachte Drehmoment ausschließlich durch magnetische Kräfte auf die innenliegende Gruppe (22) überträgt und damit die Pumpenwelle (5) und das damit verbundene Laufrad (6) antreibt. Übersteigt das Lastmoment das zulässige Kupplungsdrehmoment bzw. überschreitet der Verdrehwinkel von Außen- und Innenrotor (10, 20) den Punkt der maximal zulässigen Last, so bleibt der Innenrotor (20) stehen, d.h. die Kupplung reißt ab. Durch Wiederanfahren der Antriebseinheit wird der Synchronbetrieb wiederhergestellt; eine Entmagnetisierung oder Schädigung der Magnete (12, 22) tritt hierbei nicht auf. Der Antrieb der Magnetkupplungspumpe kann mit Normmotoren in Direkteinschaltung ohne spezielle Anlaufunterstützungen erfolgen.

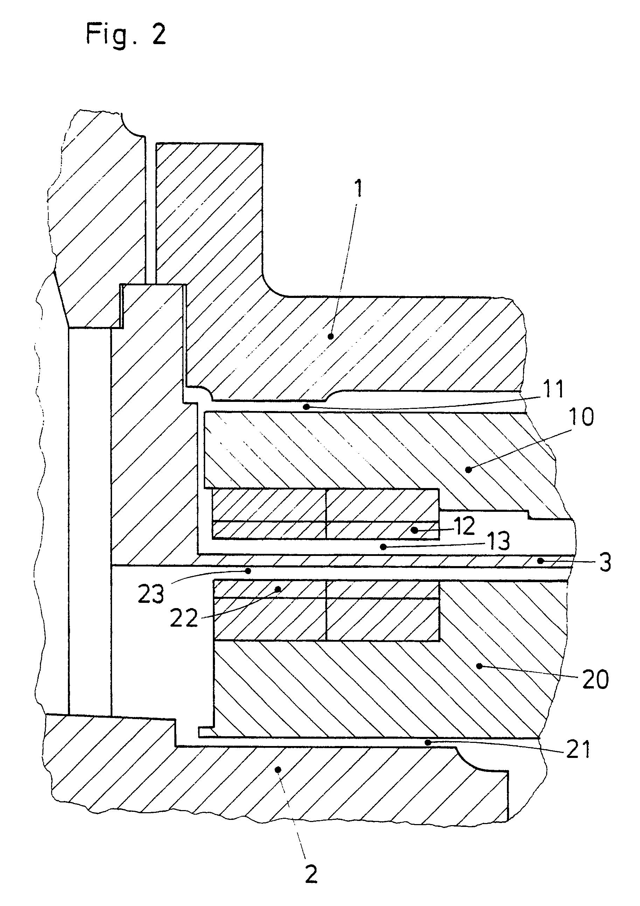

Wie aus Figur 2 deutlich wird, sind der zwischen Lagerträger (1) und Außenrotor (10) befindliche Lagerträgerspalt (11) und der Zentrierringspalt (21) zwischen Zentrierring (2) und Innenrotor (20) kleiner als die Magnetspalte (13, 23) zwischen den Magneten (12, 22) und dem Spalttopf (3). Das Verhältnis von Lagerträgerspalt (11) und Zentrierringspalt (21) zu den Magnetspalten (13, 23) beträgt zweckmäßigerweise zwischen 0,5 bis 0,9, wobei der Lagerträgerspalt (11) und der Zentrierringspalt (21) vorzugsweise eine Weite von etwa 1 mm aufweisen.

Der Zentrierringspalt (21) kann aufgrund bestimmter konstruktiver Erwägungen etwas kleiner als der Lagerträgerspalt (11) sein und der Magnetaußenspalt (13) zur Optimierung der Momentenübertragung etwas größer als der Magnetinnenspalt (23) sein. Der Zentrierringspalt (21) und der Lagerträgerspalt (11) können aber auch gleich groß ausgebildet werden, ebenso der Magnetaußenspalt (13) und der Magnetinnenspalt (23) unter Berücksichtigung der in jedem Fall gemäß der Erfindung unterschiedlichen Verhältnisse. Die Magnetspalte (13, 23) können dabei eine Weite von 0,5 bis 3 mm aufweisen.

Der Lagerträgerspalt (11) kann auf dem vollen Umfang in gleichmäßig enger Abmessung vorgesehen sein. Aus Gründen der Kühlung des Außenrotors (10) wird durch Bohrungen (14) im Außenrotor (10) eine Strömung erzeugt, die unter anderem durch den engen Lagerträgerspalt (11) geführt werden muß. Um die Reibungsverluste des Zirkulationsstromes zu reduzieren, die das Zirkulationsvolumen mitbestimmen, kann der Spalt (11) aber auch unterbrochen ausgebildet sein. In diesem Fall besteht der Spalt (11) nur an beispielsweise vier oder sechs gleichmäßig auf dem Umfang des Lagerträgers (1) verteilten Stellen, die insgesamt in ihrer Länge 30 - 40 % des Gesamtumfanges betragen, während 60 - 70 % der Umfangslänge eine ungehinderte Zirkulation des Kühlluftstromes zulassen. In den ausgesparten Bereichen beträgt die Spaltweite 3 - 10 mm.

Der zwischen Zentrierring (2) und Innenrotor (20) liegende Zentrierringspalt (21) ist möglichst eng dimensioniert, und zwar über seine gesamte Länge. Dies geschieht vorteilhaft deshalb, um einem möglichst geringen Teil des aus dem Fördergut bestehenden Kühlstromes den Durchtritt durch diesen Spalt (21) zu erlauben und stattdessen eine möglichst große Menge durch den inneren Magnetspalt (23) zwischen Innenrotor (20) und Spalttopf (3) zu führen, damit die im Spalttopf (3) und den innenliegenden Magneten (22) entstehende Wärme optimal abgeführt werden kann.

Durch eine geeignete Abstimmung der Wandstärke des Spalttopfs (3) und der Spaltweiten (13, 23) zwischen Innenrotor (20) bzw. Außenrotor (10) und Spalttopf (3) wird eine Minimierung von Wirbelstromverlusten und eine Maximierung der Betriebssicherheit realisiert.

Die erfindungsgemäßen Maßnahmen sind nicht auf das in den Zeichnungsfiguren dargestellte Ausführungsbeispiel beschränkt. So kann beispielsweise, ohne den Rahmen der Erfindung zu verlassen, die Berührung von Rotoren und Spalttopf zur Vermeidung von Schäden bei Lagerverschleiß auch durch andere, dem Fachmann geläufige konstruktive Maßnahmen verhindert werden. Die jeweilige konstruktive Ausgestaltung ist in Anpassung an spezielle Grundversionen beliebiger Magnetkupplungspumpen dem Fachmann anheimgestellt.

## Ansprüche

1. Magnetkupplungspumpe, insbesondere für das Fördern von gefährlichen und umweltbelastenden Flüssigkeiten, mit Pumpenlaufrad und einem damit drehfest verbundenen Innenrotor, der um einen Zentrierring mit der Laufradwelle drehbar angeordnet ist und über eine Magnetkupplung mit in einem Lagerträger angeordneten, angetriebenen Außenrotor in Wirkungsverbindung steht, wobei das Antriebsmoment mittels Magnetfeldern synchron vom atmosphärenseitigen Außenrotor durch einen druckdichten Spalttopf auf den in der Förderflüssigkeit arbeitenden Innenrotor und Laufrad übertragbar ist, **dadurch gekennzeichnet**, daß der zwischen Lagerträger (1) und Außenrotor (10) befindliche Lagerträgerspalt (11) und der Zentrierringspalt (21) zwischen Zentrierring (2) und Innenrotor (20) kleiner sind als die Magnetspalte (13, 23) zwischen den Magneten (12, 22) und dem Spalttopf (3).

2. Magnetkupplungspumpe nach Anspruch 1, **dadurch gekennzeichnet**, daß das Verhältnis von Lagerträgerspalt (11) und Zentrierringspalt (21) zu den Magnetspalten (13, 23) zwischen 0,5 bis 0,9 beträgt.

3. Magnetkupplungspumpe nach Anspruch 1 oder 2, **dadurch gekennzeichnet**, daß die Magnetspalte (13, 23) eine Weite von 0,5 bis 3 mm aufweisen, vorzugsweise im Bereich um 1 mm.

4. Magnetkupplungspumpe nach einem oder mehreren der vorhergehenden Ansprüche 1 bis 3, **dadurch gekennzeichnet**, daß der Zentrierringspalt (21) gleich groß ist wie der Lagerträgerspalt (11).

5. Magnetkupplungspumpe nach einem oder mehreren der vorhergehenden Ansprüche 1 bis 3, **dadurch gekennzeichnet**, daß der Zentrierringspalt (21) etwas kleiner ist als der Lagerträgerspalt (11), wobei vorzugsweise der Zentrierringspalt (21) möglichst eng über seine gesamte Länge dimensioniert ist.

6. Magnetkupplungspumpe nach einem oder mehreren der vorhergehenden Ansprüche 1 bis 5, **dadurch gekennzeichnet**, daß der Magnetaußenspalt (13) gleich groß ist wie der Magnetinnenspalt (23).

7. Magnetkupplungspumpe nach einem oder mehreren der vorhergehenden Ansprüche 1 bis 5, **dadurch gekennzeichnet**, daß der Magnetaußenspalt (13) etwas größer ist als der Magnetinnenspalt (23).

8. Magnetkupplungspumpe nach einem oder mehreren der vorhergehenden Ansprüche 1 bis 7, **dadurch gekennzeichnet**, daß der Lagerträgerspalt (11) auf dem vollen Umfang des Lagerträgers (1) in gleichmäßig enger Abmessung vorgesehen ist.

9. Magnetkupplungspumpe nach einem oder mehreren der vorhergehenden Ansprüche 1 bis 7, **dadurch gekennzeichnet**, daß der Lagerträgerspalt (11) unterbrochen ausgebildet ist, vorzugsweise nur an vier oder sechs gleichmäßig auf dem Umfang des Lagerträgers (1) verteilten Stellen, die insgesamt in ihrer Länge 30 - 40 % des Gesamtumfanges betragen, während 60 - 70 % der Umfangslänge eine ungehinderte Zirkulation des Kühlluftstromes zulassen, wobei in den ausgesparten Bereichen die Spaltweite 3 - 10 mm beträgt.

10. Magnetkupplungspumpe nach einem oder mehreren der vorhergehenden Ansprüche 1 bis 9, **dadurch gekennzeichnet**, daß der Lagerträgerspalt (11) von außen zugänglich bzw. direkt anbohrbar ausgebildet ist.

EP 0 398 175 A1

Fig. 1

1
4
2
3
7
5
8
6
9
12
22
10
20
14

Fig. 2

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| | **EINSCHLÄGIGE DOKUMENTE** | | EP 90108896.3 |
| X | GB - A - 922 319 (FRANZ KLAUS) * Gesamt; insbesondere Seite 3, Zeilen 25-41; Fig. 1 * -- | 1 | F 04 D 13/02 H 02 K 49/10 |
| A | | 2-10 | |
| X | PATENT ABSTRACTS OF JAPAN, unexamined application, M Sektion, Band 6, Nr. 157, 18. August 1982 THE PATENT OFFICE JAPANESE GOVERNMENT, Seite 103 M 150 * Kokai-Nr. 57-73 892 (SEISAKUSHO); insebesondere Figur, Pos.Nr. 10,11,12,19 * | 1 | |
| A | ---- | 2-10 | |

RECHERCHIERTE SACHGEBIETE (Int Cl⁵)

F 04 D 7/00
F 04 D 13/00
F 04 D 29/00
H 02 K 49/00

Der vorliegende Recherchenbericht wurde für alle Patentansprüche erstellt.

| Recherchenort | Abschlußdatum der Recherche | Prüfer |
|---|---|---|
| WIEN | 17-08-1990 | WERDECKER |